# EUROPEAN PATENT SPECIFICATION

(11) **EP 3 840 094 B1**
(45) Date of publication and mention of the grant of the patent: **22.06.2022**
(21) Application number: 20215777.2
(22) Date of filing: 18.12.2020
(51) Int. Cl.: H01M 8/06, H01M 8/16

(54) **A DEVICE AND A METHOD FOR GENERATING ELECTRICAL ENERGY FROM SOIL DEGRADATION**
VORRICHTUNG UND VERFAHREN ZUR ERZEUGUNG VON ELEKTRISCHER ENERGIE AUS BODENZERSETZUNG
DISPOSITIF ET PROCÉDÉ DE PRODUCTION D'ÉNERGIE ÉLECTRIQUE À PARTIR DE LA DÉGRADATION DU SOL

(30) Priority: 19.12.2019 IT 201900024643
(43) Date of publication of application: 23.06.2021
(73) Proprietor: Voltaplant Srl, 27100 Pavia (PV) (IT)
(72) Inventor: GRANATA, Mirko Umberto, 27100 Pavia (PV) (IT); DI LORENZO, Roberto, 27100 Pavia (PV) (IT); MALCOVATI, Piero, 27100 Pavia (PV) (IT); ASSINI, Silvia Paola, 27100 Pavia (PV) (IT)
(74) Representative: Locas, Davide

(56) References cited:
- WO-A1-2008/109911
- WO-A1-2008/127109
- WO-A1-2015/183084
- WO-A2-2005/005981
- US-A1- 2012 292 187
- US-A1- 2014 030 555

## Description

### Field of the invention

The present invention relates to a device and a method for generating electrical energy from soil degradation, which is the energy source for a microbial fuel cell, and all system is regenerated or not from the waste of living plant.

### Background to the invention

Microbial fuel cells combined with living plants for the production of electricity are known from the prior art.

For example, WO 2007/006107 discloses to a plant-soil battery and, more particularly, to a plant-soil battery that includes: a plant body; a soil layer in which the plant body is planted. An anode electrode is disposed in the soil layer and includes micro-organisms that decompose glucose discharged from the plant body and generate electrons. A cathode electrode is further disposed in the soil layer for receiving the electrons.

A further example of a device for converting light energy into electrical energy is disclosed in European Patent EP 2 137 782 B1, relating to a device comprising a reactor, where the reactor comprises an anode compartment and a cathode compartment. The anode compartment comprises an anodophilic micro-organism capable of oxidizing an electron donor compound, and a living plant or part thereof.

A main drawback of known solutions is associated to the fact that physical contact between the soil in which the plant is cultivated and either the anode or the cathode of the fuel cell is required for proper operation of the system.

As a consequence, the whole device needs to be assembled at the same time, including both the electrical and the biological components.

This makes known solution unsuitable for industrial production since it would require cultivating the plant for a long time before use, from manufacturing to the actual installation of the device.

### Summary of the invention

The object of the invention is to provide a device and a method for generating electrical energy from soil degradation which is structurally and functionally designed to overcome at least partially one or more of disadvantages mentioned with reference to the cited prior art.

Within this object, an aim of the invention is to provide a device for generating electrical energy from soil degradation that is suitable for production in industrial scale.

A further aim is to provide a device for generating electrical energy from soil degradation in which electrical and chemical components can be assembled in their final state, even if the soil is not yet provided and the plant not yet planted.

Also, an aim of the invention is to provide a device for generating electrical energy from soil degradation in which the plant or more in general the energy source can be easily replaced.

This object and aims are reached by a device and a method for generating electrical energy from soil degradation as defined by one or more the followings claims.

According to the invention, it is provided a device for generating electrical energy from soil degradation comprising a container, defining an upper compartment and a lower compartment. The device comprises a microbial fuel cell including an anode, a cathode, a separator material and anodophilic micro-organisms, preferably provided in the separator material. In some embodiments, the cathode is positioned at a transition area between the upper and lower compartments, while the anode and the separator material are located in the lower compartment. Soil, which is subjected to degradation deriving from the waste of a plant, is instead provided in the upper compartment.

It will be therefore appreciated that in the present invention the upper compartment is adapted to contain soil as in a normal pot for plant cultivation, since no component of the fuel cell is provided therein. A draining layer is also provided in the transition area, allowing water poured onto the soil to drain to the separator material in the lower compartment.

Accordingly, water reaches the microbial fuel cell after being enriched with the waste of the plant, thus making energy generation possible. If a living plant is planted in the soil, water will also be used for its cultivation. Nevertheless, it will be appreciated that the device according to the invention can operate also in case a living plant is not located in the soil, provided that degradation occurs is said soil, i.e. that organic compounds (e.g. glucose) suitable for feeding anodophilic micro-organisms are provided in the soil and are drained towards the lower compartment by water.

According to some aspects of the invention, waste of living plants comprises organic compounds suitable for feeding the anodophilic micro-organisms. Preferably the organic compounds includes glucose.

In any case, in preferred embodiments, a living plant is planted in the soil and, therefore, production of organic compounds (e.g. glucose) can be achieved by means of the waste of the plant, during normal cultivation thereof.

It is to be understood that in the device, according to the invention, the microbial fuel cell is located in a separated compartment from the soil and, when provided, from the living plant. In this manner the device can be manufactured without providing in a first stage either soil or plant. Accordingly, the device can be easily stored and transported.

Also, in case the plant dies during use, it will be possible to replace it basically without requiring any technical skill, thus allowing the device to last longer.

According to a further aspect, the cathode can be contained in a bag, preferably made of biodegradable material. This allows properly protecting the cathode without impairing proper operation thereof.

In preferred embodiments, the draining layer comprises a plurality of openings for allowing water to flow from the upper compartment to the lower compartment. In this manner, water poured on the plant in the upper compartment can drain to the lower compartment after receiving from the waste of the plant the substances required for the microbial fuel cell.

In some embodiments, the separator material comprises partially reduced organic carbon. In this manner the system can operate basically with any kind of plant, or even without a plant, provided that organic compounds (e.g. glucose) suitable for feeding anodophilic micro-organisms are provided through the upper compartment.

Further preferred features of the invention are defined also in the dependent claims.

### Brief description of the drawings

These and other features and advantages of the invention will be better apparent from the following description of some exemplary and non-limitative embodiments, to be read with reference to the attached drawings, wherein:

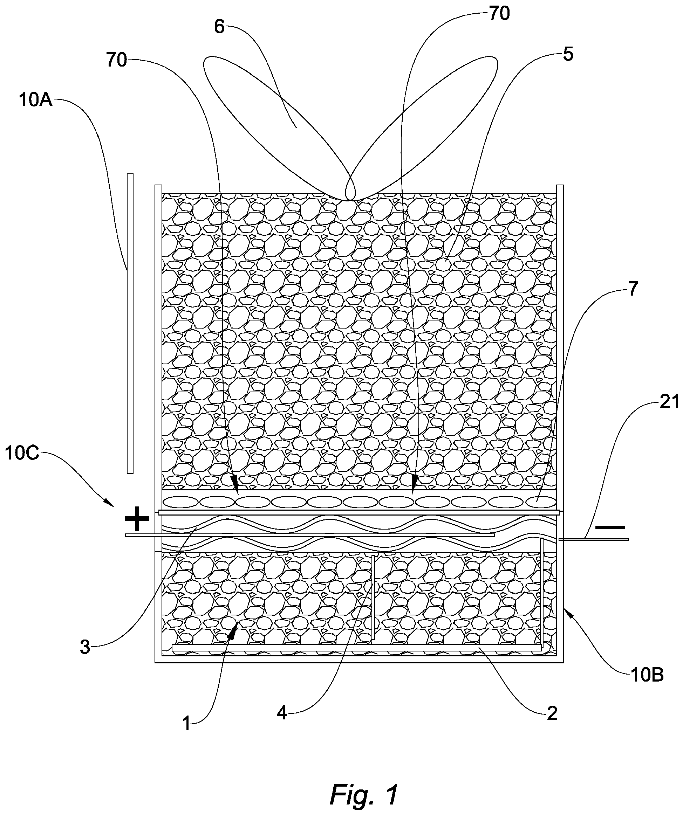

- Fig. 1 is a schematic side view of a device for generating electricity from soil degradation according to the present invention.

### Detailed description of the invention

With reference initially to Fig. 1, a device for generating electricity from soil degradation according to the invention is generally designated with the reference number 100.

As will be better explained in the following, according to an aspect of the invention, soil degradation preferably derives from waste of a living plant and, preferably, from cultivation of a living plant 6.

For this purpose, the device 100 comprises a container 10, into which the living plant 6 can be cultivated. Preferably, the container 10 defines an upper compartment 10A and a lower compartment 10B. It will be appreciated that the respective position of the upper compartment 10A and the lower compartment 10B is defined with respect to the vertical direction, i.e. with the upper compartment 10A positioned above the lower compartment 10B.

The device 100 of the invention further comprises a microbial fuel cell, overall shown in Fig. 1 with the reference number 1.

In preferred embodiments, the microbial fuel cell 1 includes an anode 2, a cathode 3, a separator material 4 and anodophilic micro-organisms in the separator material 4.

Suitable anodophilic micro-organisms are e.g. represented by *Bacillus subtilis.*

According to another aspect, the separator material 4 comprises partially reduced organic carbon.

In preferred embodiments, the anode 2 is composed of metal, preferably aluminium.

The anode 2 can also comprise a side portion 21 emerging from the container 10 for improving electrical connection to any apparatus to be supplied.

The upper compartment 10A is preferably shaped as a pot and contains soil 5 and, in preferred embodiments, the living plant 6.

In some embodiments, the living plant 6 may belong either to Araceae or Cyperaceae family taxa, or to *Picea abies* L. species taxa. It will be appreciated that the device according to the present invention is only minimally influenced by the type of the living plant used and therefore also other taxa can be considered.

Between the upper and the lower compartments a transition area 10C is defined. Such transition area 10C can be either formed by a physical separation between the compartments or only virtually defined therebetween.

According to an aspect of the invention, the cathode 3 can be advantageously positioned at the transition area 10C, preferably below the upper compartment 10A.

To this end, the transition area 10C can further comprises a draining layer 7 configured for allowing water poured into the soil 5 in the upper compartment 10A to drain through the separator material 4 in the lower compartment 10B, while supporting said soil 5.

In view of the above configuration it can be understood that water in the soil can drain to the lower compartment 10B, transporting the waste of the living plant from the upper comportment 10A to the lower compartment 10B and reach the microbial fuel cell 1 located therein.

Water with organic compounds coming from the upper compartment 10A goes through the cathode 3 and then in the separator material 4, where, within the separator, the organic compounds are degraded by anodophilic micro-organisms capable of oxidizing organic compounds. Such degradation process frees electrons that are used to produce electrical energy.

Accordingly, electric energy can be generated by the fuel cell 1 by simply pouring water for irrigating the plant 6. The process is virtually endless as long as the plant lives. In any case, as previously mentioned, both soil and plant can be easily replaced in the device of the present invention, thus making possible an effective and long lasting production of electrical energy.

As a matter of fact, the waste for producing electrical energy can be produced by the living plant 6 and, in particular, by the cultivation of the plant 6 obtained by pouring water on the soil 5.

According to preferred embodiments, water flow is allowed by providing the draining layer 7 with a plurality of openings 70. The layer 7 can e.g. be formed by a mesh defining the openings 70 and, at the same time, allowing proper support for the soil 5 and the plant 6.

Proper protection of the cathode 3 is also achieved in preferred embodiments by providing a bag realized with non-conductive material, containing the cathode 3. Preferably, the bag is made of eco-sustainable non-conductive material.

The invention thus solves the problem stated, while at the same time offering a plurality of advantages, some of which are listed in the following:
- The device and the method of the invention can operate without a plant or with any kind of plant because the source of energy is present in the material used to separate anode and cathode;
- The plant or energy source used in the device and in the method of the invention is easy to be replaced or changed;
- The device can be produced at industrial scale and worldwide because each part is measurable (weight);
- The device can be composed of simple materials and it can be composed of recycled materials;
- The device and the method is basically independent of the plant used; the plant is added on top of the container and can be easily replaced;
- The device is well drained thanks to holes positioned at the cathode level.

## Claims

1. A device (100) for generating electrical energy from soil degradation comprising a container (10), defining an upper compartment (10A) and a lower compartment (10B), and a microbial fuel cell (1) including an anode (2), a cathode (3), a separator material (4) and anodophilic micro-organisms in said separator material (4), wherein the cathode (3) is positioned at a transition area (10C) between the upper compartment (10A) and the lower compartment (10B), said anode (2) and said separator material (4) being located in the lower compartment (10B), soil (5) having waste of a living plant (6) being provided in the upper compartment (10A), the transition area (10C) further comprising a draining layer (7) configured for allowing water poured onto the soil (5) in the upper compartment (10A) drain to the separator material (4) in the of lower compartment (10B) while supporting said soil (5).

2. The device (100) according to claim 1, further comprising a living plant (6) planted in said soil (5).

3. The device (100) according to claim 2, wherein the living plant (6) belongs either to Araceae or Cyperaceae family taxa, or to *Picea abies* L. species taxa.

4. The device (100) according to any one of the preceding claims, wherein the cathode (3) is contained in a bag preferably made of biodegradable material.

5. The device (100) according to any one of the preceding claims, wherein the draining layer comprises a plurality of openings (70) for the passage of water from the upper compartment (10A) to the lower compartment (10B), said openings (70) being preferably formed by a mesh.

6. The device (100) according to any one of the preceding claims, wherein the separator material (4) comprises partially reduced organic carbon.

7. The device (100) according to any one of the preceding claims, wherein the anode (2) is composed of metal, preferably aluminium.

8. The device (100) according to any one of the preceding claims, wherein the anode (2) comprises a side portion (21) emerging from the container.

9. The device (100) according to any one of the preceding claims, wherein said anodophilic micro-organisms comprises *Bacillus subtilis.*

10. The device (100) according to any one of the preceding claims, wherein said upper compartment (10A) is shaped as a pot.

11. A method for converting light energy into electrical energy comprising:
o Providing waste of a living plant in an upper compartment (10A);
o Providing a microbial fuel cell (1) including an anode (2), a cathode (3), a separator material (4) and anodophilic micro-organisms in said separator material (4) in a lower compartment (10B) positioned below said upper compartment;
o Draining water transporting said waste of the living plant from the upper comportment to the lower compartment so as to reach said microbial fuel cell (1).

12. The method according to claim 11, wherein waste is produced by a living plant (6).

13. The method according to claim 12, wherein said living plant (6) is planted in soil (5) provided in the upper compartment (10A).

14. The method according to claim 12 or 13, wherein water is poured on the soil (5) of upper compartment (10A) for cultivation of said living plant (6).

15. The method according to anyone of claims 11 to 14, wherein , the waste of a living plant comprises organic compounds, the organic compounds being degraded by said anodophilic micro-organisms, the electrical energy being produced by said degradation.

## Patentansprüche

1. Vorrichtung (100) zur Erzeugung von elektrischer Energie aus Bodendegradation, umfassend einen Behälter (10), der eine obere Kammer (10A) und eine untere Kammer (10B) definiert, und eine mikrobielle Brennstoffzelle (1), die eine Anode (2), eine Kathode (3), ein Trennmaterial (4) und anodophile Mikroorganismen im Trennmaterial (4) umfasst, wobei die Kathode (3) in einem Übergangsbereich (10C) zwischen der oberen Kammer (10A) und der unteren Kammer (10B) positioniert ist, wobei die Anode (2) und das Trennmaterial (4) in der unteren Kammer (10B) angeordnet sind, wobei Erde (5) mit Abfällen einer lebenden Pflanze (6) in der oberen Kammer (10A) vorgesehen ist, wobei der Übergangsbereich (10C) ferner eine Drainageschicht (7) umfasst, die so konfiguriert ist, dass diese Wasser, das auf die Erde (5) in der oberen Kammer (10A) gegossen wird, zum Trennmaterial (4) in der unteren Kammer (10B) abfließen lässt, während sie die Erde (5) abstützt.

2. Vorrichtung (100) nach Anspruch 1, ferner umfassend eine lebende Pflanze (6), die in die Erde (5) gepflanzt ist.

3. Vorrichtung (100) nach Anspruch 2, wobei die lebende Pflanze (6) entweder zu den Taxa der Familie Araceae oder Cyperaceae oder zu den Taxa der Spezies Picea abies L. gehört.

4. Vorrichtung (100) nach einem der vorhergehenden Ansprüche, wobei die Kathode (3) in einem Beutel enthalten ist, der vorzugsweise aus biologisch abbaubarem Material hergestellt ist.

5. Vorrichtung (100) nach einem der vorhergehenden Ansprüche, wobei die Drainageschicht eine Vielzahl von Öffnungen (70) für den Durchtritt von Wasser aus der oberen Kammer (10A) zur unteren Kammer (10B) umfasst, wobei die Öffnungen (70) vorzugsweise durch ein Netz gebildet sind.

6. Vorrichtung (100) nach einem der vorhergehenden Ansprüche, wobei das Trennmaterial (4) teilweise reduzierten organischen Kohlenstoff umfasst.

7. Vorrichtung (100) nach einem der vorhergehenden Ansprüche, wobei die Anode (2) aus Metall, vorzugsweise Aluminium, gebildet ist.

8. Vorrichtung (100) nach einem der vorhergehenden Ansprüche, wobei die Anode (2) einen Seitenabschnitt (21) aufweist, der aus dem Behälter heraustritt.

9. Vorrichtung (100) nach einem der vorhergehenden Ansprüche, wobei die anodophilen Mikroorganismen *Bacillus subtilis* umfassen.

10. Vorrichtung (100) nach einem der vorhergehenden Ansprüche, wobei die obere Kammer (10A) als Topf geformt ist.

11. Verfahren zum Umwandeln von Lichtenergie in elektrische Energie, umfassend:
o Bereitstellen von Abfällen einer lebenden Pflanze in einer oberen Kammer (10A);
o Bereitstellen einer mikrobiellen Brennstoffzelle (1) mit einer Anode (2), einer Kathode (3), einem Trennmaterial (4) und anodophilen Mikroorganismen im Trennmaterial (4) in einer unteren Kammer (10B), die unterhalb der oberen Kammer positioniert ist;
o Abfließen lassen von Wasser, das Abfälle der lebenden Pflanze von der oberen Kammer in die untere Kammer transportiert, um die mikrobielle Brennstoffzelle (1) zu erreichen.

12. Verfahren nach Anspruch 11, wobei die Abfälle von einer lebenden Pflanze (6) produziert werden.

13. Verfahren nach Anspruch 12, wobei die lebende Pflanze (6) in Erde (5) gepflanzt wird, die in der oberen Kammer (10A) vorgesehen ist.

14. Verfahren nach Anspruch 12 oder 13, wobei Wasser auf die Erde (5) der oberen Kammer (10A) zur Kultivierung der lebenden Pflanze (6) gegossen wird.

15. Verfahren nach einem der Ansprüche 11 bis 14, wobei die Abfälle einer lebenden Pflanze organische Verbindungen aufweisen, wobei die organischen Verbindungen durch die anodophilen Mikroorganismen abgebaut werden wobei die elektrische Energie durch die Degradation erzeugt wird.

## Revendications

1. Dispositif (100) de génération d'énergie électrique à partir d'une dégradation du sol comprenant un récipient (10), définissant un compartiment supérieur (10A) et un compartiment inférieur (10B), et une pile à combustible microbienne (1) comportant une anode (2), une cathode (3), un matériau séparateur (4) et des micro-organismes anodophiles dans ledit matériau séparateur (4), dans lequel la cathode (3) est positionnée au niveau d'une zone de transition (10C) entre le compartiment supérieur (10A) et le compartiment inférieur (10B), ladite anode (2) et ledit matériau séparateur (4) étant situés dans le compartiment inférieur (10B), un sol (5) ayant des déchets d'une plante vivante (6) étant disposée dans le compartiment supérieur (10A), la zone de transition (10C) comprenant en outre une couche drainante (7) configurée pour permettre à de l'eau versée sur le sol (5) dans le compartiment supérieur (10A) de s'écouler vers le matériau séparateur (4) dans le compartiment inférieur (10B) tout en supportant ledit sol (5).

2. Dispositif (100) selon la revendication 1, comprenant en outre une plante vivante (6) plantée dans ledit sol (5).

3. Dispositif (100) selon la revendication 2, dans lequel la plante vivante (6) appartient soit aux taxons de la famille des Aracées ou des Cyperacées, soit aux taxons de l'espèce *Picea abies L.*

4. Dispositif (100) selon l'une quelconque des revendications précédentes, dans lequel la cathode (3) est contenue dans un sac de préférence en matériau biodégradable.

5. Dispositif (100) selon l'une quelconque des revendications précédentes, dans lequel la couche drainante comprend une pluralité d'ouvertures (70) pour le passage d'eau du compartiment supérieur (10A) vers le compartiment inférieur (10B), lesdites ouvertures (70) étant de préférence formées par un treillis.

6. Dispositif (100) selon l'une quelconque des revendications précédentes, dans lequel le matériau séparateur (4) comprend du carbone organique partiellement réduit.

7. Dispositif (100) selon l'une quelconque des revendications précédentes, dans lequel l'anode (2) est composée de métal, de préférence d'aluminium.

8. Dispositif (100) selon l'une quelconque des revendications précédentes, dans lequel l'anode (2) comprend une partie latérale (21) émergeant du récipient.

9. Dispositif (100) selon l'une quelconque des revendications précédentes, dans lequel lesdits micro-organismes anodophiles comprennent *Bacillus subtilis.*

10. Dispositif (100) selon l'une quelconque des revendications précédentes, dans lequel ledit compartiment supérieur (10A) a la forme d'un pot.

11. Procédé de conversion d'énergie lumineuse en énergie électrique comprenant :
o la fourniture de déchets d'une plante vivante dans un compartiment supérieur (10A) ;
o la fourniture d'une pile à combustible microbienne (1) comportant une anode (2), une cathode (3), un matériau séparateur (4) et des micro-organismes anodophiles dans ledit matériau séparateur (4) dans un compartiment inférieur (10B) positionné en dessous dudit compartiment supérieur ;
o le drainage d'eau transportant lesdits déchets de la plante vivante du compartiment supérieur vers le compartiment inférieur de manière à atteindre ladite pile à combustible microbienne (1).

12. Procédé selon la revendication 11, dans lequel des déchets sont produits par une plante vivante (6).

13. Procédé selon la revendication 12, dans lequel ladite plante vivante (6) est plantée dans un sol (5) prévu dans le compartiment supérieur (10A).

14. Procédé selon la revendication 12 ou 13, dans lequel de l'eau est versée sur le sol (5) de compartiment supérieur (10A) pour la culture de ladite plante vivante (6).

15. Procédé selon l'une quelconque des revendications 11 à 14, dans lequel les déchets d'une plante vivante comprennent des composés organiques, les composés organiques étant dégradés par lesdits micro-organismes anodophiles, l'énergie électrique étant produite par ladite dégradation.
